# EUROPÄISCHE PATENTSCHRIFT

(11) **EP 0 544 153 B1**
(45) Veröffentlichungstag und Bekanntmachung des Hinweises auf die Patenterteilung: **22.05.1996**
(21) Anmeldenummer: 92119335.5
(22) Anmeldetag: 12.11.1992
(51) Int. Cl.: C09B 29/42, C09B 29/033, D06P 1/18, D06P 3/54

(54) **Textile Anwendung von Thiophenazofarbstoffen mit einer Kupplungskomponente aus der Diaminopyridinreihe**
Textile application of Thiophene azo dyes with a coupling component of the diaminopyridine series
Application textile de Colorants azoiques dérivés du thiophène ayant un copulant de la série de la diaminopyridine

(30) Priorität: 23.11.1991 DE 4138550
(43) Veröffentlichungstag der Anmeldung: 02.06.1993
(73) Patentinhaber: BASF Aktiengesellschaft, D-67063 Ludwigshafen (DE)
(72) Erfinder: Hansen, Guenter, Dr., W-6700 Ludwigshafen (DE); Lamm, Gunther, Dr., W-6733 Hassloch (DE); Loeffler, Hermann, W-6720 Speyer (DE); Reichelt, Helmut Dr., W-6730 Neustadt (DE); Degen, Helmut, W-6710 Frankenthal (DE); Lange, Arno, Dr., W-6702 Bad Duerkheim (DE); Grund, Clemens, Dr., W-6800 Mannheim 24 (DE)

(56) Entgegenhaltungen:
- EP-A- 0 201 896
- EP-A- 0 214 445
- EP-A- 0 346 729
- US-A- 4 016 152

## Beschreibung

Die vorliegende Erfindung betrifft ein neues Verfahren zum Färben und Bedrucken von textilen Materialien mittels Azofarbstoffen, das dadurch gekennzeichnet ist, daß man Azofarbstoffe der Formel I 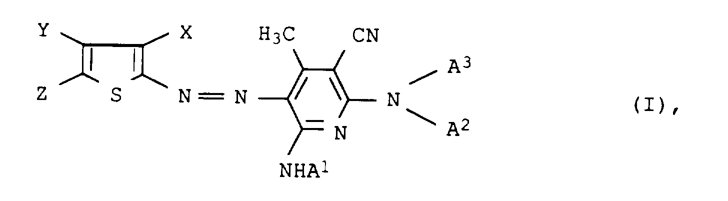 verwendet, in der
- X: Cyano oder einen Rest der Formel COOQ¹ oder CONQ¹Q, wobei Q¹ und Q gleich oder verschieden sind und unabhängig voneinander jeweils für gegebenenfalls substituiertes C₁-C₁₂-Alkyl, das durch 1 bis 3 Sauerstoffatome in Etherfunktion unterbrochen sein kann, C₅-C₇-Cycloalkyl, C₃-C₄-Alkenyl, gegebenenfalls substituiertes Phenyl oder Q¹ und Q zusammen mit dem sie verbindenden Stickstoffatom für einen 5- oder 6-gliedrigen gesättigten heterocyclischen Rest der gegebenenfalls weitere Heteroatome enthält, oder Q zusätzlich auch für Wasserstoff stehen,
- Y: C₁-C₆-Alkoxy, C₁-C₆-Alkylthio, C₁-C₆-Alkylsulfonyl, Halogen, gegebenenfalls substituiertes Phenoxy, gegebenenfalls substituiertes Phenylthio oder gegebenenfalls substituiertes Phenylsulfonyl,
- Z: Cyano, Nitro, gegebenenfalls substituiertes Phenylsulfonyl, C₁-C₆-Alkylsulfonyl, Formyl oder einen Rest der Formel -CH=T, worin T für den Rest einer CH-aciden Verbindung steht, und
- A¹, A und A³: gleich oder verschieden sind und unabhängig voneinander jeweils gegebenenfalls substituiertes C₁-C₁₂-Alkyl, das durch 1 bis 3 Sauerstoffatome in Etherfunktion unterbrochen sein kann, C₅-C₇-Cycloalkyl, gegebenenfalls substituiertes Phenyl, C₃-C₆-Alkenyl, gegebenenfalls substituiertes Benzoyl, C₁-C₈-Alkanoyl, C₁-C₆-Alkylsulfonyl oder gegebenenfalls substituiertes Phenylsulfonyl oder A und A³ zusammen mit dem sie verbindenden Stickstoffatom einen 5- oder 6-gliedrigen gesättigten heterocyclischen Rest, der gegebenenfalls weitere Heteroatome enthält, bedeuten.

Die US-A-4 939 118, deren Gegenstand ein Verfahren zur thermischen Übertragung von Azofarbstoffen ist, die eine Kupplungskomponente aus der Diaminopyridinreihe aufweisen, beschreibt auch die Übertragung von einigen Farbstoffen der Formel I. Ein Hinweis, daß sich diese Farbstoffe auch für die textile Anwendung eignen, kann aus dem genannten Dokument aber nicht entnommen wird.

Aus der EP-A-201 896 sind zwar ähnliche Farbstoffe auch für die textile Anwendung bekannt, jedoch weisen diese jeweils nur sekundäre Aminogruppen am Pyridinring auf. Außerdem hat sich gezeigt, daß die in der EP-A-201 896 genannten Farbstoffe Mängel in ihren anwendungstechnischen Eigenschaften aufweisen.

Aufgabe der vorliegenden Erfindung war es nun, ein neues Verfahren zum Färben von textilem Gewebe unter Anwendung von Azofarbstoffen auf Thienylazopyridinbasis bereitzustellen. Die Färbungen sollten insbesondere eine gute Heißlichtechtheit aufweisen.

Demgemäß wurde das eingangs näher bezeichnete Verfahren unter Anwendung von Azofarbstoffen der Formel I gefunden.

Alle in der obengenannten Formel I auftretenden Alkyl- und Alkenylgruppen können sowohl geradkettig als auch verzweigt sein.

Wenn in der obengenannten Formel I substituierte Phenylgruppen auftreten, können als Substituenten z.B. C₁-C₄-Alkyl, Chlor, Brom, Nitro oder C₁-C₄-Alkoxy in Betracht kommen. Die Phenylreste weisen dabei in der Regel 1 bis 3 Substituenten auf.

Wenn in der obengenannten Formel I substituierte Alkylgruppen auftreten, können als Substituenten z.B. Hydroxy, Cyclohexyloxy, Phenoxy, C₁-C₄-Alkoxycarbonyl, Cyano, Cyclohexyl oder Phenyl in Betracht kommen. Die Alkylreste weisen dabei in der Regel 1 oder 2 Substituenten auf.

Reste A¹, A, A³, Q¹ und Q sind z.B. Methyl, Ethyl, Propyl, Isopropyl, Butyl, Isobutyl, sec-Butyl, Pentyl, Isopentyl, Neopentyl, tert-Pentyl, Hexyl, 2-Methylpentyl, Hexyl, Heptyl, Octyl, 2-Ethylhexyl, Nonyl, Decyl, Undecyl, Dodecyl, 2-Methoxyethyl, 2-Ethoxyethyl, 2-Propoxyethyl, 2-Butoxyethyl, 2-Isobutoxyethyl, 2- oder 3-Methoxypropyl, 1-Methoxyprop-2-yl, 2- oder 3-Ethoxypropyl oder 2- oder 3-Propoxypropyl, 3,6-Dioxaheptyl, 3,6-Dioxaoctyl, 4,7-Dioxaoctyl, 4,7-Dioxanonyl, 4,8-Dioxadecyl, 4,6-Dioxaundecyl, 3,6,9-Trioxaundecyl, 4,7,10-Trioxaundecyl, 4,7,10-Trioxadodecyl, 2-Hydroxyethyl, 2-Hydroxypropyl, 3-Hydroxypropyl, 4-Hydroxybutyl, 2-Cyclohexyloxyethyl, 2- oder 3-Cyclohexyloxypropyl, 2- oder 4-Cyclohexyloxybutyl, 2-Phenoxyethyl, 2-Phenoxypropyl, 3-Phenoxypropyl, 4-Phenoxybutyl, 2-Methoxycarbonylethyl, 2-Ethoxycarbonylethyl, 2- oder 3-Methoxycarbonylpropyl, 2- oder 3-Ethoxycarbonylpropyl 2- oder 3-Butoxycarbonylpropyl, 4-Methoxycarbonylbutyl, 4-Ethoxycarbonylbutyl, 2-Cyanoethyl, 2- oder 3-Cyanopropyl, 4-Cyanobutyl, 2-Cyclohexylalkyl, 2- oder 3-Cyclohexylpropyl, Benzyl, 1- oder 2-Phenylethyl, Cyclopentyl, Cyclohexyl, Cycloheptyl, Phenyl, 2-Methylphenyl, 4-Methylphenyl, 4-Ethylphenyl, 4-Isopropylphenyl, 4-Butylphenyl, 2,4-Dimethylphenyl, 2,4,6-Trimethylphenyl, 4-Cyanophenyl, 4-Chlorphenyl, 2,4-Dichlorphenyl, 2-Bromphenyl, 3-Nitrophenyl, 4-Nitrophenyl, Prop-2-en-1-yl, 2-Methylprop-2-en-1-yl, But-2-en-1-yl oder But-3-en-1-yl.

Reste Y sind z.B. Methylthio, Ethylthio, Propylthio, Isopropylthio, Butylthio, Isobutylthio, Pentylthio, Hexylthio, Phenylthio, 2-Methylphenylthio, 2-Methoxyphenylthio, 2-Chlorphenylthio, Methoxy, Ethoxy, Propoxy, Isopropoxy, Butoxy, Isobutoxy, sec-Butoxy, Pentyloxy, Isopentyloxy, Neopentyloxy, tert-Pentyloxy, Hexyloxy, 2-Methylpentyloxy, Phenoxy, 2-, 3- oder 4-Methylphenoxy, 2-, 3- oder 4-Methoxyphenoxy, 2, 3- oder 4-Chlorphenoxy, Fluor, Chlor oder Brom.

Reste A¹, A, A³ und Y sind wie auch Reste Z, weiterhin z.B. Methylsulfonyl, Ethylsulfonyl, Propylsulfonyl, Isopropylsulfonyl, Butylsulfonyl, Isobutylsulfonyl, sec-Butylsulfonyl, Pentylsulfonyl, Isopentylsulfonyl, Neopentylsulfonyl, Hexylsulfonyl, Phenylsulfonyl, 2-Methylphenylsulfonyl, 2-Methoxyphenylsulfonyl oder 2-Chlorphenylsulfonyl.

Wenn die Reste Q¹ und Q zusammen mit dem sie verbindenden Stickstoffatom einen fünf- oder sechsgliedrigen gesättigten heterocyclischen Rest, der gegebenenfalls weitere Heteroatome enthält, bedeuten, so kommen dafür z. B. Pyrrolidinyl, Piperidinyl, Morpholinyl, Thiomorpholinyl, Thiomorpholinyl-S,S-dioxid, Piperazinyl oder N-(C₁-C₄-Alkyl)piperazinyl, wie N-Methyl- oder N-Ethylpiperazinyl, in Betracht.

Reste A¹, A und A³ sind weiterhin z. B. Formyl, Acetyl, Propionyl, Butyryl, Isobutyryl, Pentanoyl, Hexanoyl, Heptanoyl, Octanoyl, 2-Ethylhexanoyl, Benzoyl, 2-, 3- oder 4-Methylbenzoyl, 2-, 3- oder 4-Methoxybenzyl oder 2-, 3- oder 4-Chlorbenzoyl.

Wenn Z für den Rest -CH=T steht, worin T sich von einer CH-aciden Verbindung H₂T ableitet, können als CH-acide Verbindungen H₂T z.B. Verbindungen der Formeln IIa bis IIg 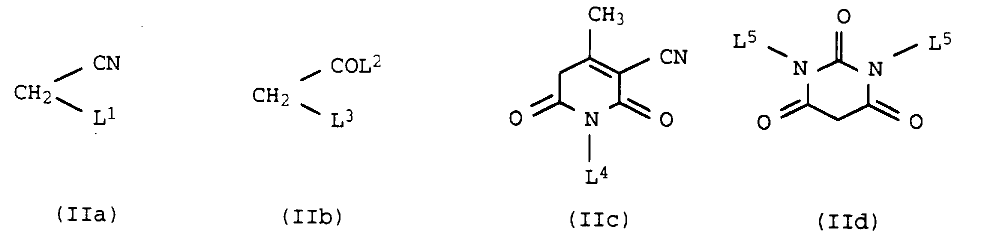 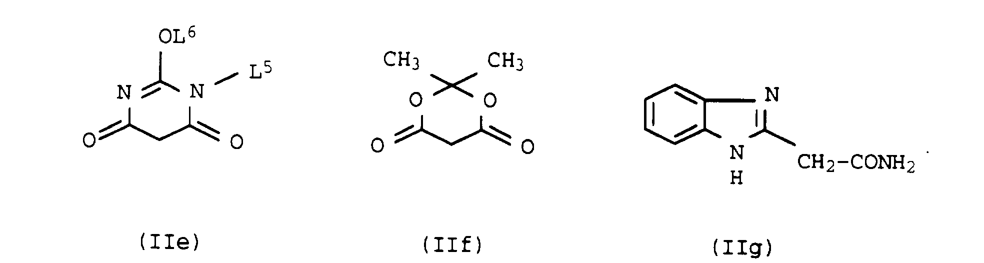 in Betracht kommen, wobei
- L¹: Cyano, Nitro, C₁-C₄-Alkanoyl, gegebenenfalls substituiertes Benzoyl, C₁-C₄-Alkylsulfonyl, gegebenenfalls substituiertes Phenylsulfonyl, Carboxyl, C₁-C₄-Alkoxycarbonyl, Phenoxycarbonyl, Carbamoyl, C₁-C₄-Mono- oder Dialkylcarbamoyl, gegebenenfalls substituiertes Phenylcarbamoyl, gegebenenfalls substituiertes Phenyl, Benzthiazol-2-yl, Benzimidazol-2-yl, 5-Phenyl-1,3,4-thiadiazol-2-yl oder 2-Hydroxychinoxalin-3-yl,
- L: C₁-C₄-Alkyl oder C₁-C₄-Alkoxy,
- L³: C₁-C₄-Alkoxycarbonyl, Phenylcarbamoyl oder Benzimidazol-2-yl,
- L⁴: Wasserstoff oder C₁-C₄-Alkyl,
- L⁵: Wasserstoff, C₁-C₄-Alkyl oder Phenyl und
- L⁶: C₁-C₄-Alkyl bedeuten.

Dabei ist ein Rest, der sich von Formel IIa oder IIb ableitet, worin L¹ Cyano, C₁-C₄-Alkanoyl oder C₁-C₄-Alkoxycarbonyl, L C₁-C₄-Alkyl oder C₁-C₄-Alkoxy und L³ C₁-C₄-Alkoxycarbonyl bedeuten, hervorzuheben.

Besonders hervorzuheben ist ein Rest, der sich von Formel IIa oder IIb ableitet, worin L¹ Cyano oder C₁-C₄-Alkoxycarbonyl, L C₁-C₄-Alkoxy und L³ C₁-C₄-Alkoxycarbonyl bedeuten.

Bevorzugt verwendet man Azofarbstoffe der Formel I, in der
- X: Cyano oder den Rest der Formel COOQ¹, worin Q¹ für C₁-C₄-Alkyl steht,
- Y: C₁-C₄-Alkoxy, C₁-C₄-Alkylthio, C₁-C₄-Alkylsulfonyl, Chlor, Brom, Phenoxy, Phenylthio oder Phenylsulfonyl,
- Z: Cyano, Formyl oder einen Rest der Formel -CH=T, worin T die obengenannte Bedeutung besitzt, und
- A¹, A und A³: unabhängig voneinander jeweils C₁-C₈-Alkyl, das gegebenenfalls substituiert ist und durch 1 oder 2 Sauerstoffatome in Etherfunktion unterbrochen sein kann, C₅-C₇-Cycloalkyl oder C₃-C₄-Alkenyl oder A und A³ zusammen mit dem sie verbindenden Stickstoffatom einen 5- oder 6-gliedrigen gesättigten heterocyclischen Rest, der gegebenenfalls weitere Heteroatome enthält, bedeuten.

Besonders bevorzugt verwendet man Azofarbstoffe der Formel I, in der
- X: Cyano,
- Y: Ethoxy, C₁-C₄-Alkylthio, Chlor, Brom, Phenoxy oder Phenylthio,
- Z: Formyl oder einen Rest der Formel 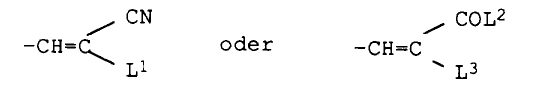 worin L¹ für Cyano, C₁-C₄-Alkanoyl oder C₁-C₄-Alkoxycarbonyl, L für C₁-C₄-Alkyl oder C₁-C₄-Alkoxy und L³ für C₁-C₄-Alkoxycarbonyl stehen, und
- A¹, A und A³: unabhängig voneinander jeweils C₁-C₈-Alkyl, das gegebenenfalls substituiert ist und durch 1 oder 2 Sauerstoffatome in Etherfunktion unterbrochen sein kann, oder A und A³ zusammen mit dem sie verbindenden Stickstoffatom Pyrrolidinyl, Piperidinyl, Morpholinyl, Piperazinyl oder N-(C₁-C₄-Alkyl)piperazinyl bedeuten.

Von besonderem Interesse ist die Anwendung von Azofarbstoffen der Formel I, in der X Cyano und Y Chlor bedeuten.

Die Herstellung der Azofarbstoffe der Formel I kann nach an sich bekannten Methoden erfolgen. Beispielsweise kann man aus dem Amin der Formel III 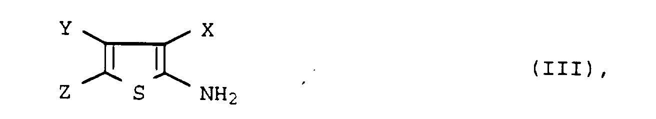 in der X, Y und Z jeweils die obengenannte Bedeutung besitzen, auf an sich bekannte Weise ein Diazoniumsalz herstellen und mit einem Diaminopyridin der Formel IV 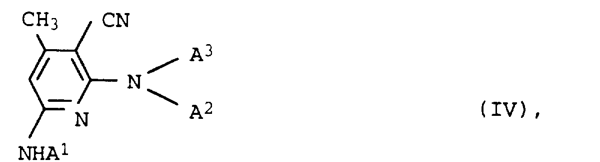 in der A¹, A und A³ jeweils die obengenannte Bedeutung besitzen, kuppeln.

Man kann aber auch Diazoniumsalze von Diazokomponenten der Formel IIIa 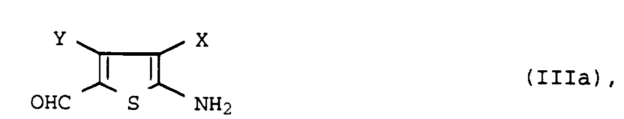 in der X und Y jeweils die obengenannte Bedeutung besitzen, mit den Diaminopyridinen IV zu den Azofarbstoffen der Formel I (Z = Formyl) kuppeln und die erhaltenen Farbstoffe mit Verbindungen der Formel H₂T nach an sich bekannten Methoden kondensieren.

Die Ausgangsverbindungen III und IV sind an sich bekannt oder können nach an sich bekannten Methoden hergestellt werden, wie sie beispielsweise in der EP-A-193 885 oder in der US-A-3 853 895 beschrieben sind.

Geeignete textile Materialien sind beispielsweise Polyester in den verschiedenen Anwendungsformen (z.B. Gewebe, Gewirke, Garn oder Flocke) oder deren Mischungen mit anderen Fasern.

Besonders vorteilhaft ist die Anwendung der Azofarbstoffe der Formel I zusammen mit UV-Absorbern. Geeignete UV-Absorber sind z.B. solche der Formel V oder VI 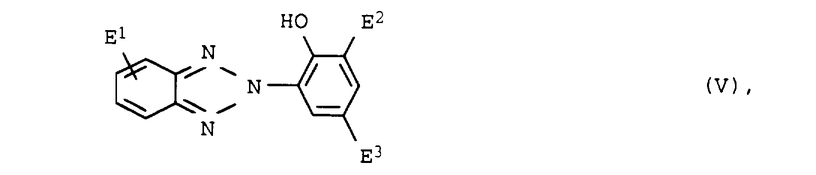 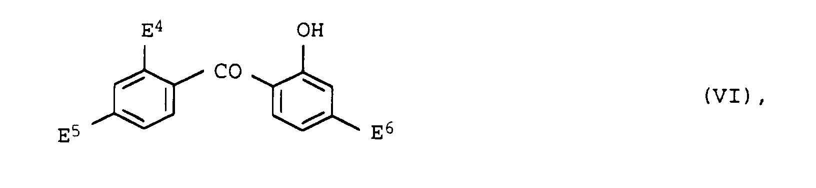 worin
- E¹: Wasserstoff oder Chlor,
- E und E³: gleich oder verschieden sind und unabhängig voneinander jeweils Wasserstoff, C₁-C₈-Alkyl, das gegebenenfalls durch Phenyl substituiert ist,
- E⁴: Wasserstoff oder Hydroxy und
- E⁵ und E⁶: gleich oder verschieden sind und unabhängig voneinander jeweils Wasserstoff, Hydroxy, C₁-C₆-Alkoxy, das gegebenenfalls durch Hydroxy, C₁-C₄-Alkoxy, C₁-C₄-Alkanoyloxy oder Benzoyloxy substituiert ist, bedeuten.

Besonders zu nennen sind dabei UV-Absorber der Formel Va, Vb, VIa oder VIb

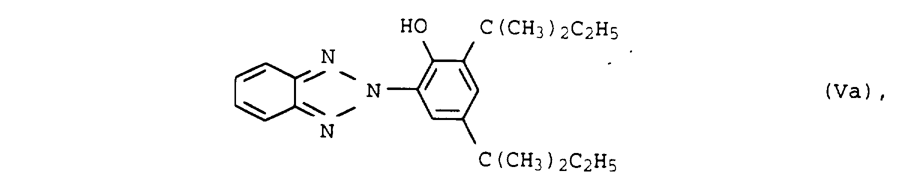

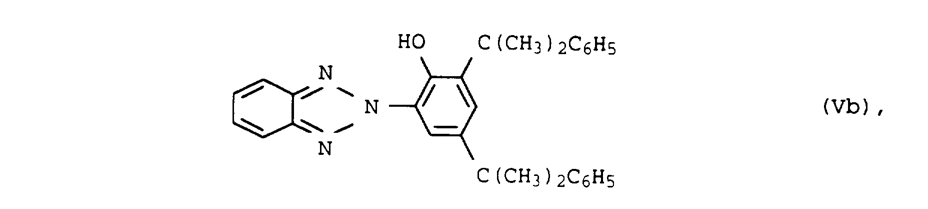

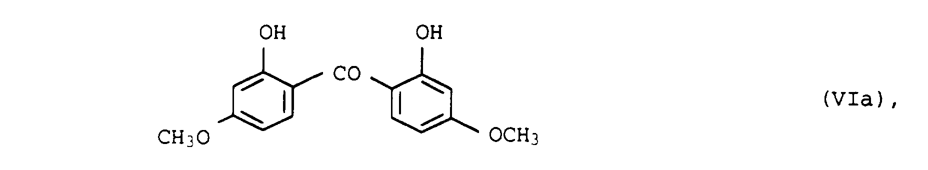

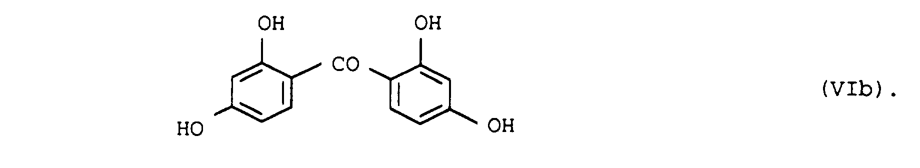

Die UV-Absorber können dabei einzeln oder auch in Mischung untereinander zur Anwendung gelangen. Dabei sind jeweils Mischungen verschiedener Spezies der Formel V oder VI oder auch Mischungen von Verbindungen der Formel V und VI geeignet.

Im allgemeinen verwendet man dabei 1 bis 8 Gew.-%, vorzugsweise 2 bis 5 Gew.-%, jeweils bezogen auf das Gewicht der Azofarbstoffe, an UV-Absorbern.

Die im erfindungsgemäßen Verfahren zur Anwendung gelangenden Azofarbstoffe der Formel I zeichnen sich durch ein vorteilhaftes anwendungstechnisches Eigenschaftsprofil aus. Insbesondere weisen sie eine ausgezeichnete Heißlichtechtheit auf. Gegenüber den aus der EP-A-201 896 bekannten Farbstoffen unterscheiden sie sich durch einen vorteilhaften Ausziehgrad.

Die folgenden Beispiele sollen die Erfindung näher erläutern.

### Allgemeine Färbevorschrift

Mittels dieser Vorschrift können die im folgenden näher beschriebenen Farbstoffe zur Anwendung gelangen.

10 g Polyestergewebe werden bei einer Temperatur von 50°C in 200 ml einer Färbeflotte gegeben, die 0,5 Gew.-%, bezogen auf das Polyestergewebe, einer Farbstoffpräparation enthält und deren pH-Wert mittels Essigsäure auf 4,5 eingestellt ist. Man behandelt 5 Minuten bei 50°C, steigert dann die Temperatur der Flotte innerhalb von 30 Minuten auf 130°C, hält 60 Minuten bei dieser Temperatur und läßt dann innerhalb von 20 Minuten auf 60°C abkühlen.

Danach wird das ausgefärbte Polyestergewebe reduktiv gereinigt, indem man es 15 Minuten in 200 ml einer Flotte, die 5 ml/l 32 gew.-%ige Natronlauge, 3 g/l Natriumdithionit und 1 g/l eines Anlagerungsproduktes von 48 mol Ethylenoxid an 1 mol Ricinusöl enthält, bei 65°C behandelt. Schließlich wird das Gewebe gespült, mit verdünnter Essigsäure neutralisiert, nochmals gespült und getrocknet.

Die obengenannte Farbstoffpräparation enthält 40 Gew.-% Azofarbstoff sowie 60 Gew.-% eines Dispergiermittels auf Basis von Ligninsulfonat, jeweils bezogen auf das Gewicht der Präparation. Bezogen auf das Gewicht an Azofarbstoff, kann die Farbstoffpräparation weiterhin noch 1 bis 8 Gew.-% eines oben näher bezeichneten UV-Absorbers enthalten.

### Beispiel 1

17,5 g Eis wurden mit 94 g konz. Schwefelsäure versetzt, das Gemisch auf 20°C abgekühlt und dann mit 15 g Eisessig verdünnt. Man kühlte auf 0 bis 5°C ab und gab noch 32 g 44 gew.-%ige Nitrosylschwefelsäure hinzu. In dieses Gemisch trug man innerhalb von ca. 15 Minuten unter Kühlung bei 0 bis 5°C 18,7 g 2-Amino-3-cyano-4-chlor-5-formylthiophen ein und rührte das Reaktionsgemisch anschließend noch 4 Stunden bei 0 bis 5°C. Die Lösung wurde auf ein Gemisch ausgerührt, das folgendermaßen hergestellt wurde:
37,6 g des Pyridins der Formel 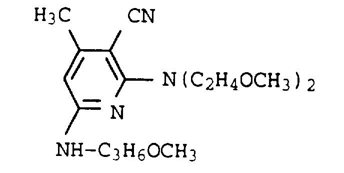 wurden in Wasser mit Salzsäure gelöst. Dann kühlte man durch Zugabe von Eis auf 0 bis -5°C ab.

Während des Zulaufs der Diazokomponente hielt man die Temperatur der Kupplung durch Zugabe von Eis bei ≤ 3 °C. Der pH-Wert wurde durch Versetzen mit Natriumacetat im Bereich von 0,3 bis 2,0 gehalten. Die Kupplung war rasch beendet. Der ausgefallene Farbstoff der Formel 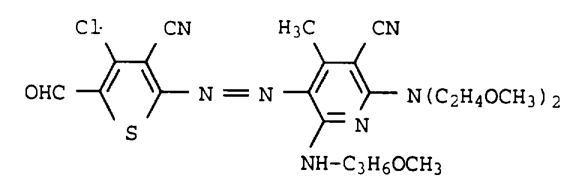 wurde abgetrennt, salzfrei gewaschen und getrocknet.

Man erhielt 50,7 g des Farbstoffs in Form eines dunkelroten Pulvers, welches Polyester mit blaustichig roter Nuance färbt.

Analog Beispiel 1 werden die in den folgenden Tabellen 1 und 2 aufgeführten Farbstoffe erhalten.

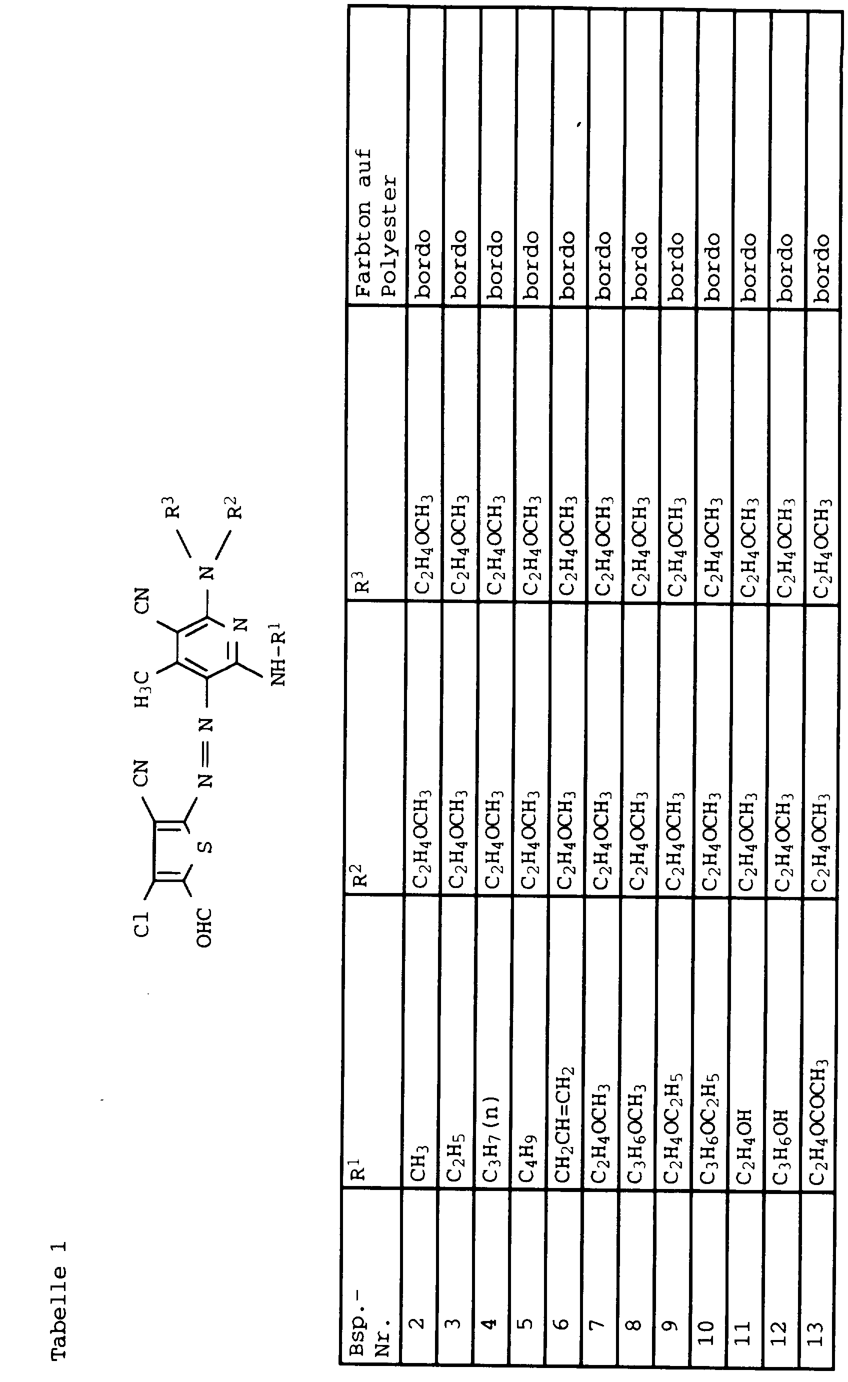

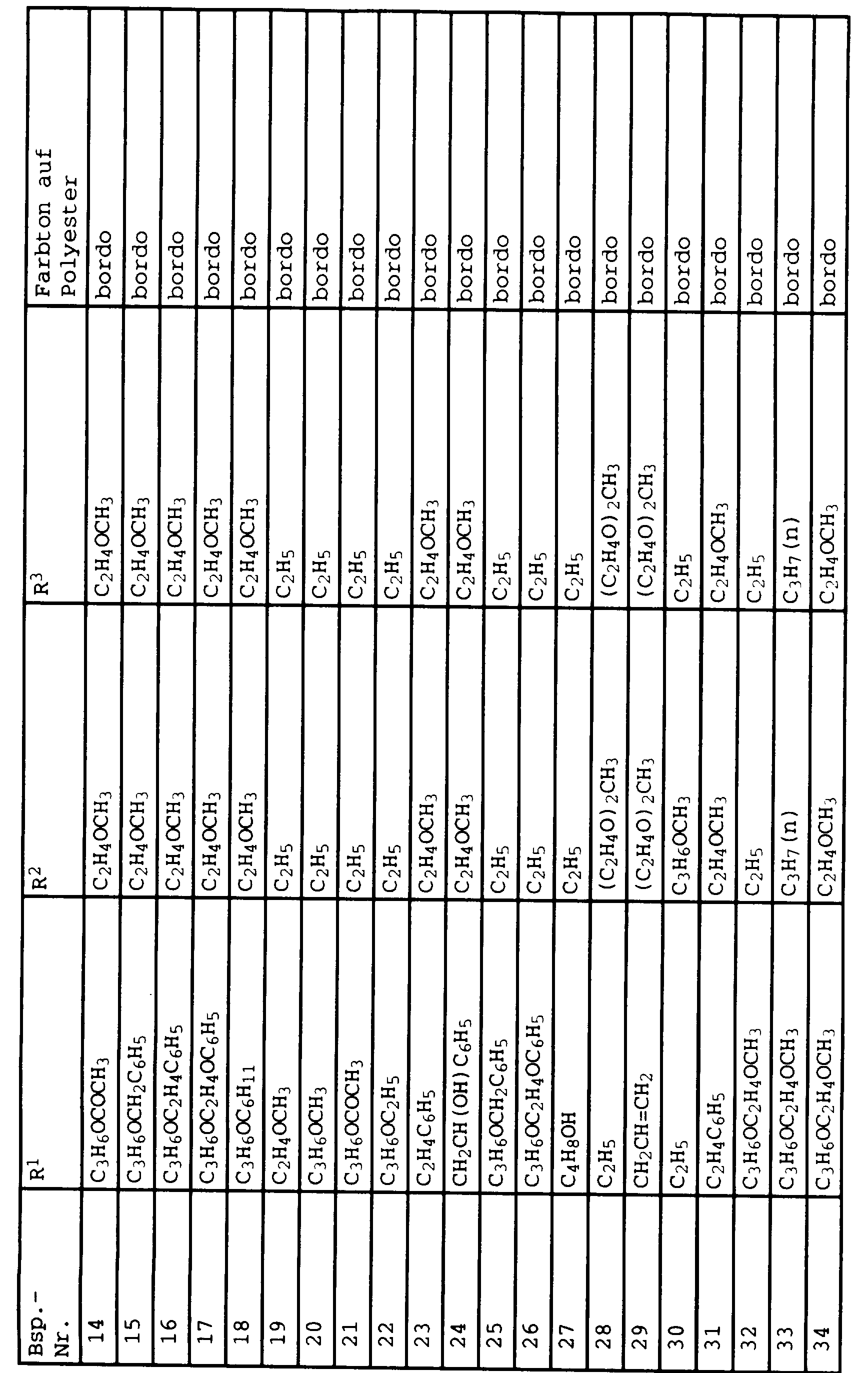

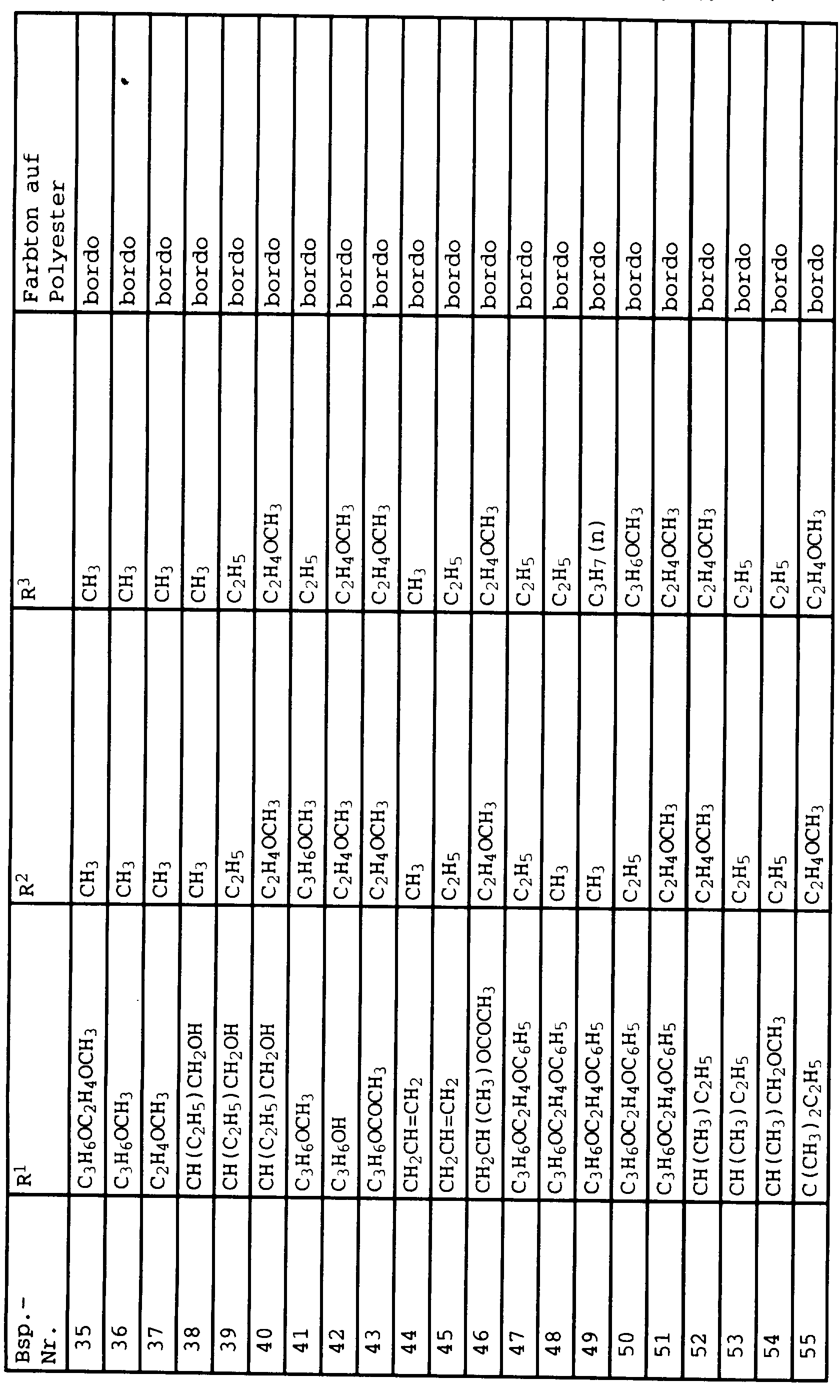

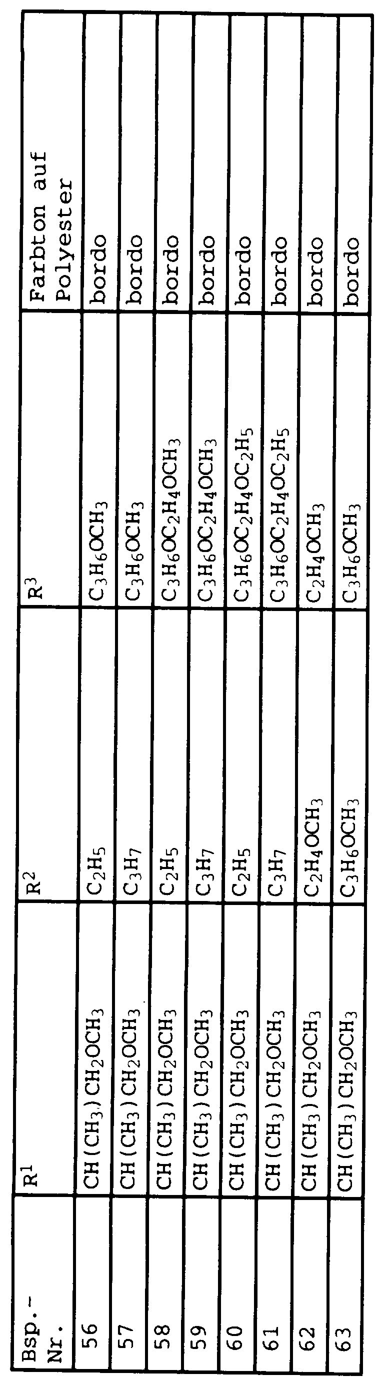

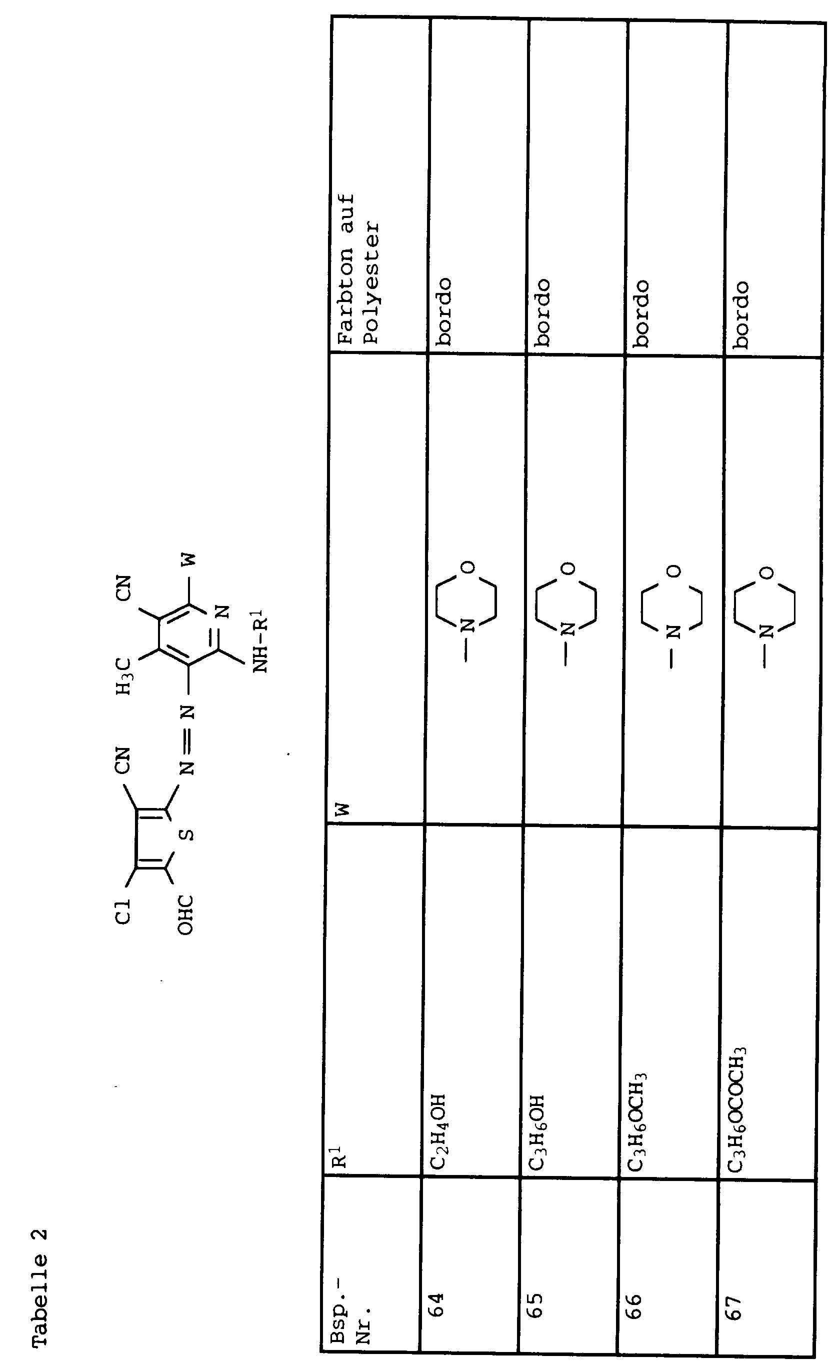

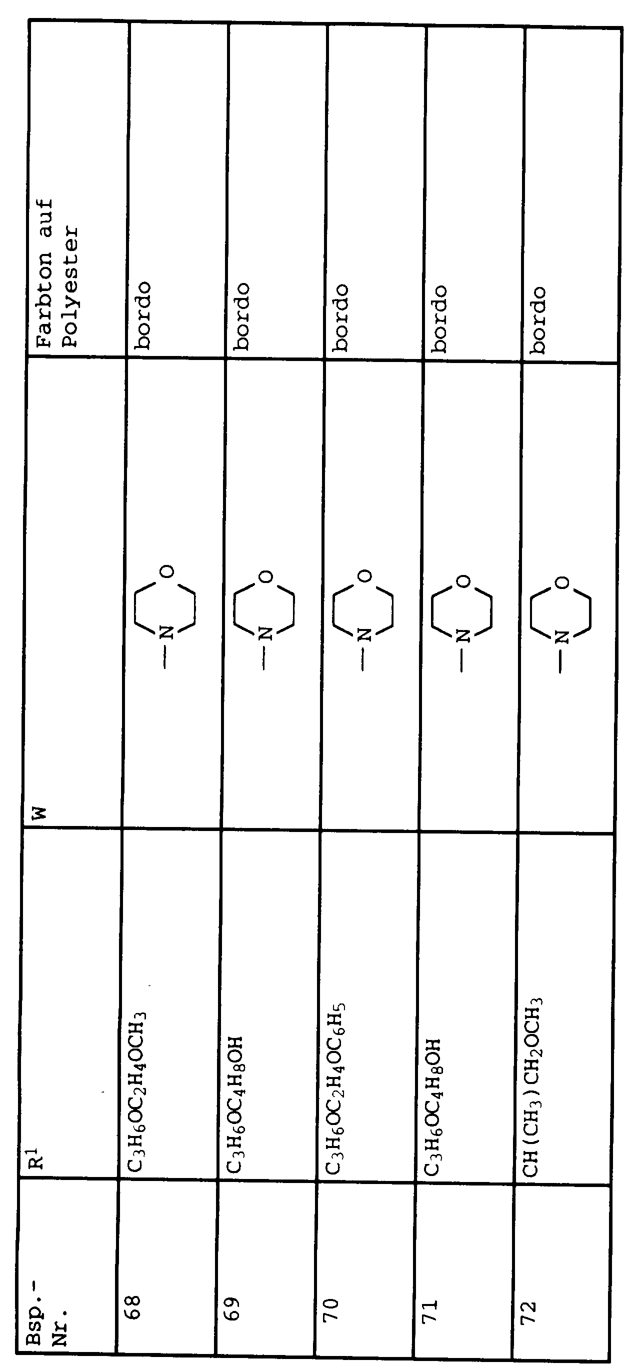

### Beispiel 73

4,6 g Farbstoffs der Formel 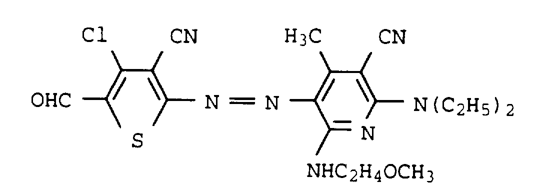 (Bsp. 19) wurden in 80 ml Propanol mit 1,32 g Malondinitril und 1,0 g Natriumacetat 2 Stunden bei Raumtemperatur gerührt. Danach wurde abgesaugt, mit Propanol gewaschen und getrocknet. Man erhielt 5,0 g des Farbstoffs der Formel 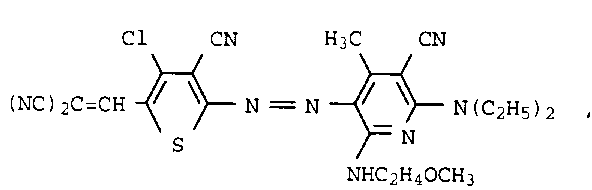 der Polyestermaterial in blauem Ton mit sehr guter Echtheit färbt.

### Beispiel 74

5,34 g des Farbstoffs der Formel 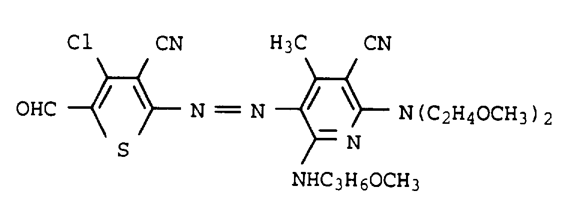 (Bsp. 8) wurden wie in Bsp. 73 beschrieben mit 4,23 g Cyanessigsäurebutylester umgesetzt. Man erhielt 5,8 g des Farbstoffs der Formel 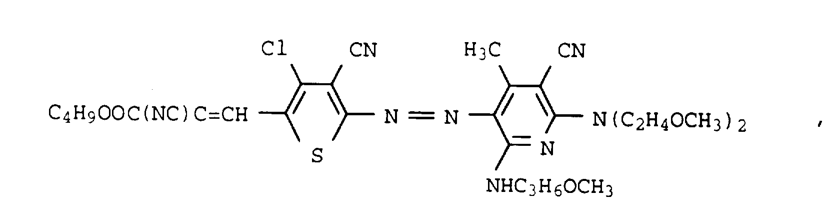 der Polyestermaterial in echtem blauen Ton färbt.

### Beispiel 75

240 ml Eisessig und 80 ml Propionsäure wurden gemischt und auf 0°C abgekühlt. Dann gab man noch 80 g 80 gew.-%ige Schwefelsäure hinzu. Bei -3 bis +3°C wurden dann 29,1 g der Diazokomponente der Formel 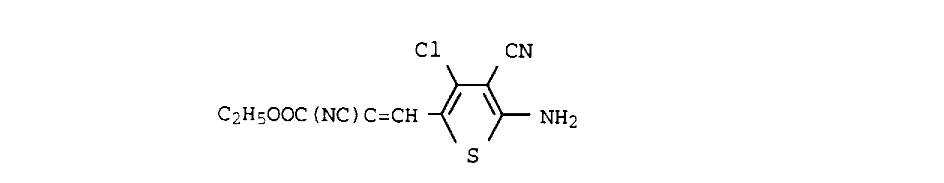 als fein gemahlenes Pulver hinzugegeben. Das Gemisch rührte man 15 Minuten bei -3 bis +5°C, dann tropfte man unter Kühlung bei dieser Temperatur 33 g 42 gew.-%ige Nitrosylschwefelsäure innerhalb von 15 bis 20 Minuten unter gutem Rühren hinzu. Das Reaktionsgemisch rührte man 2,5 Stunden bei 0 bis 5°C nach und vereinigte es dann mit einer auf 0 bis 5°C abgekühlten Lösung von 30,3 g der Kupplungskomponente der Formel 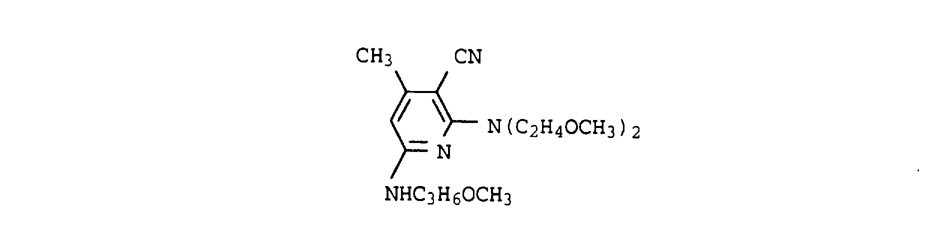 in 200 ml Eisessig und 50 ml Propionsäure. Danach gab man unter Rühren bei 0 bis 5°C 90 g wasserfreies Natriumacetat hinzu. Der entstandene Farbstoff der Formel 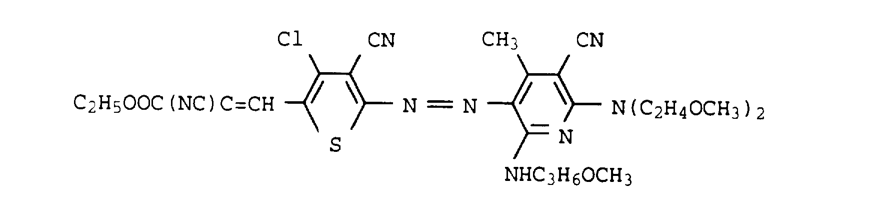 wurde durch Zugabe von Wasser ausgefällt und isoliert. Man erhielt 56 g eines blauschwarzen Pulvers, das sich in N,N-Dimethylformamid mit blauer Farbe löst und Polyestergewebe blau mit sehr guten Echtheiten färbt.

Analog den Beispielen 73 bis 75 können die in den folgenden Tabellen 3 und 4 aufgeführten Farbstoffe erhalten werden.

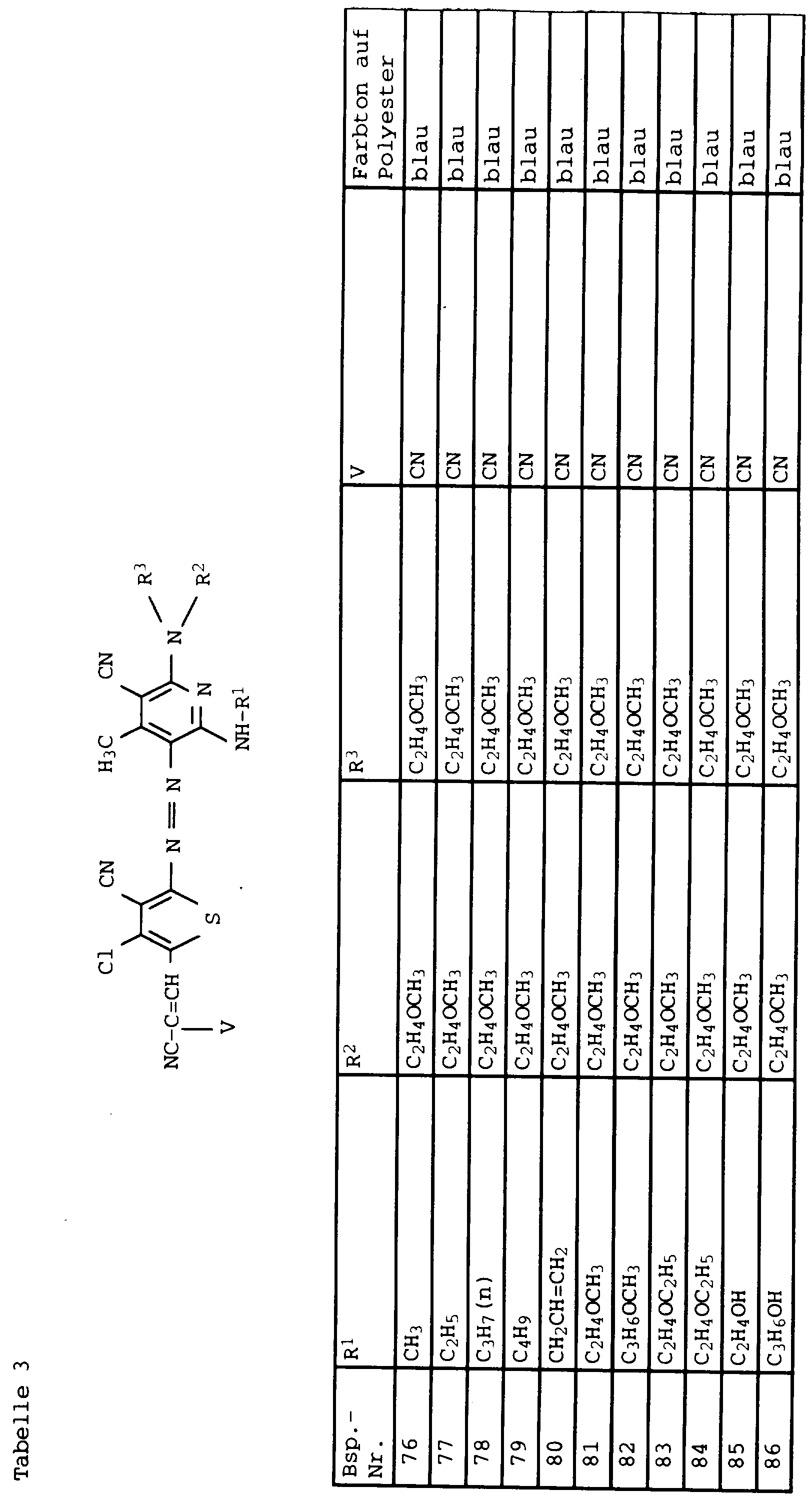

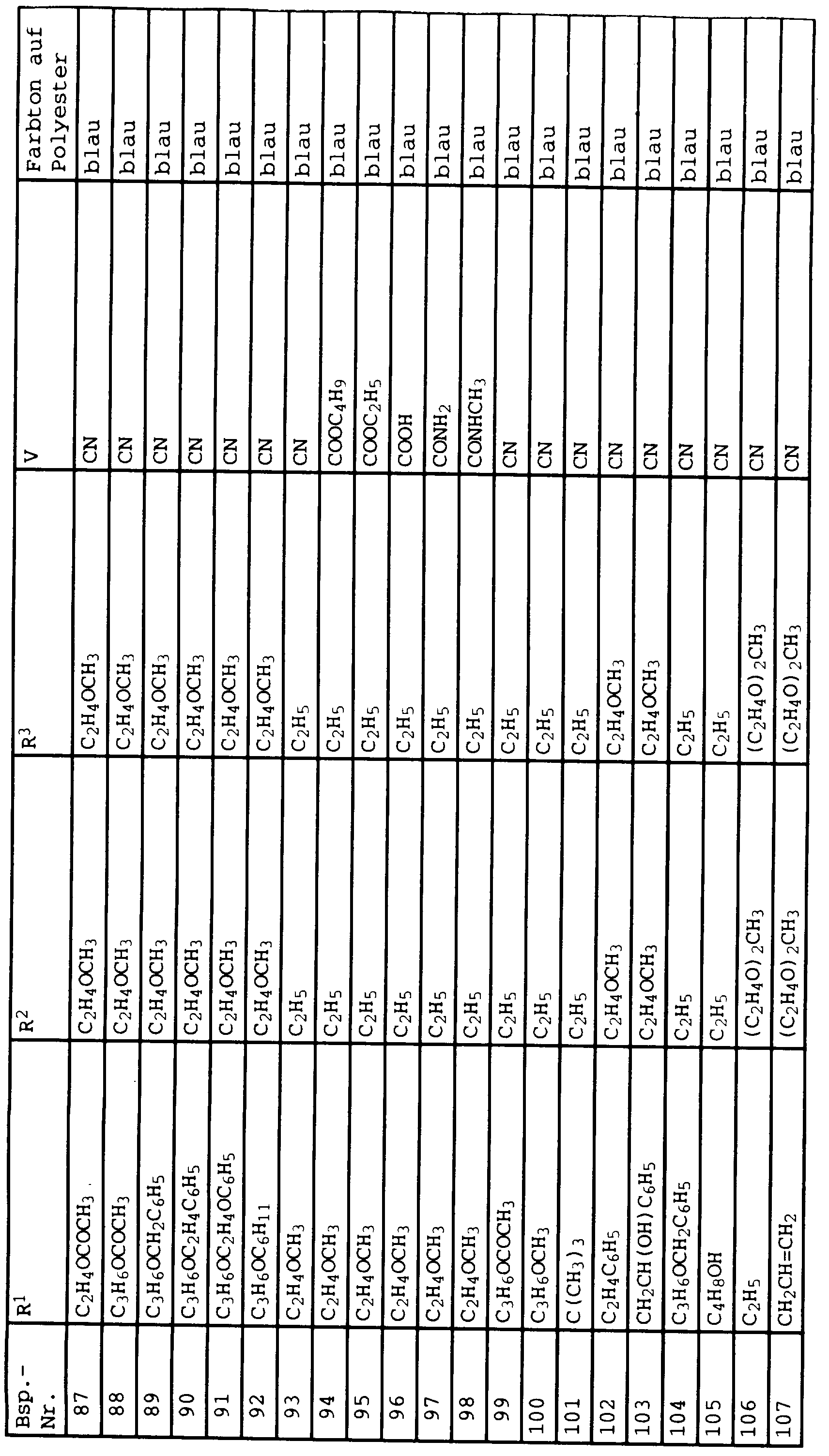

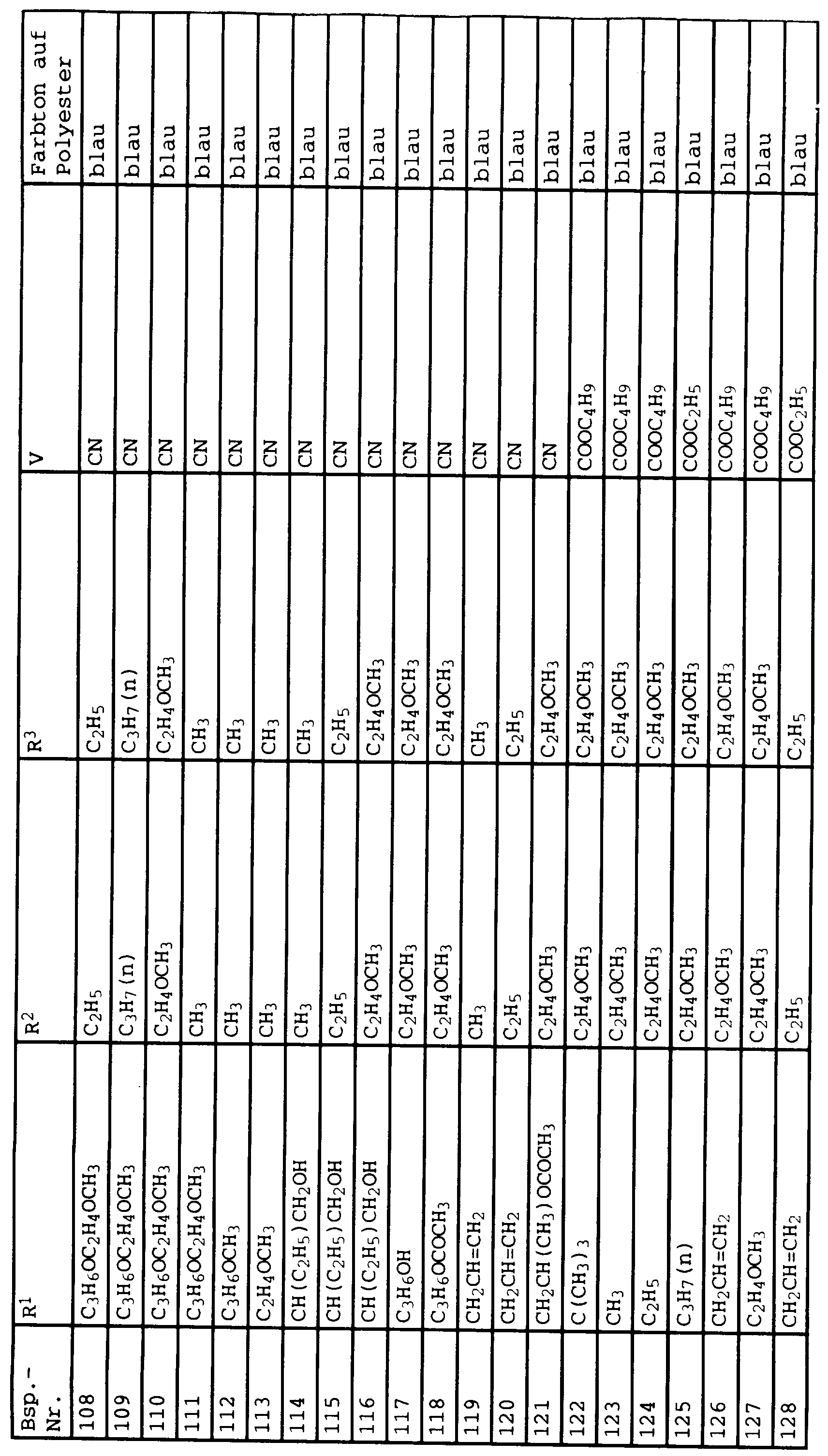

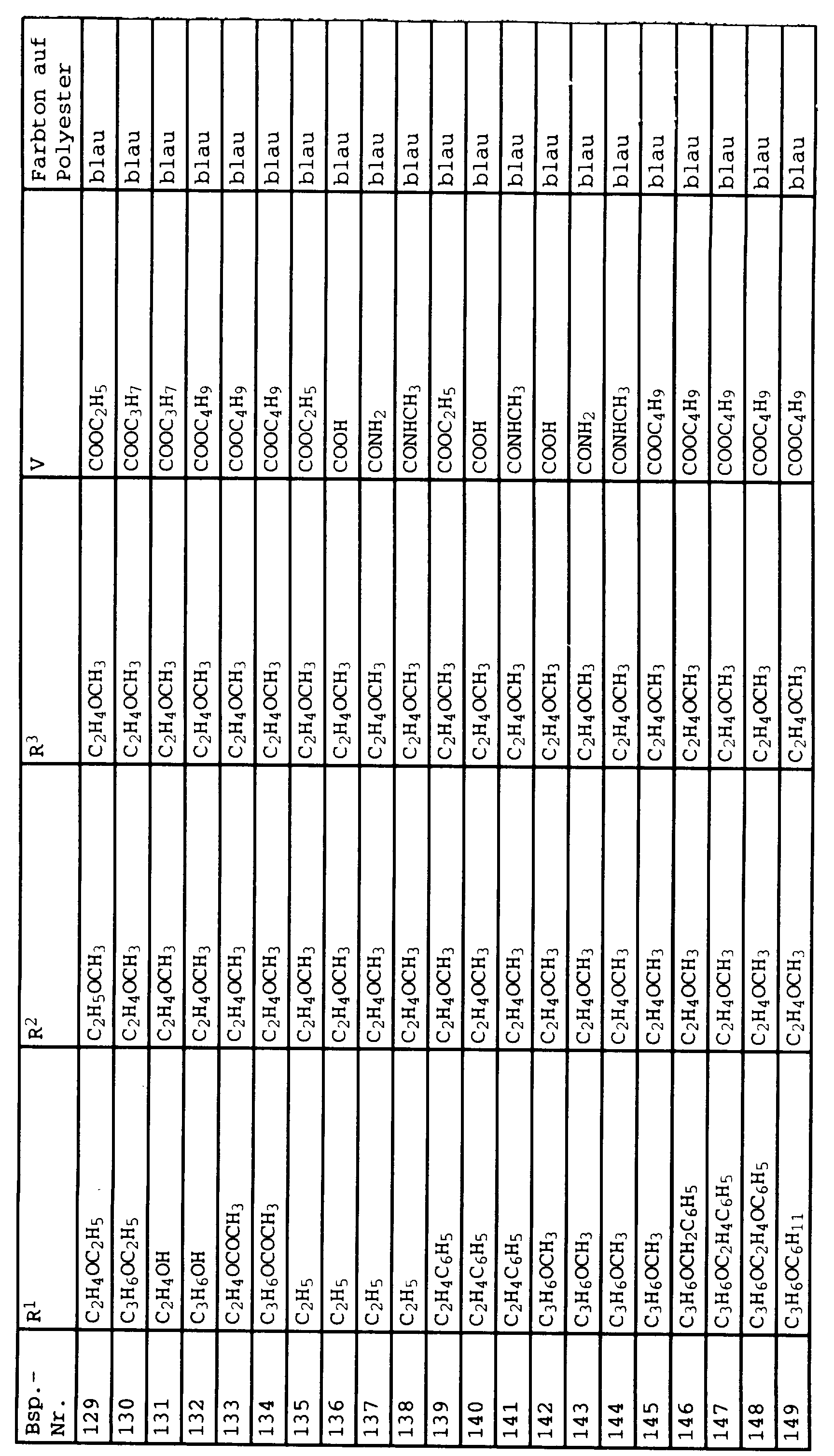

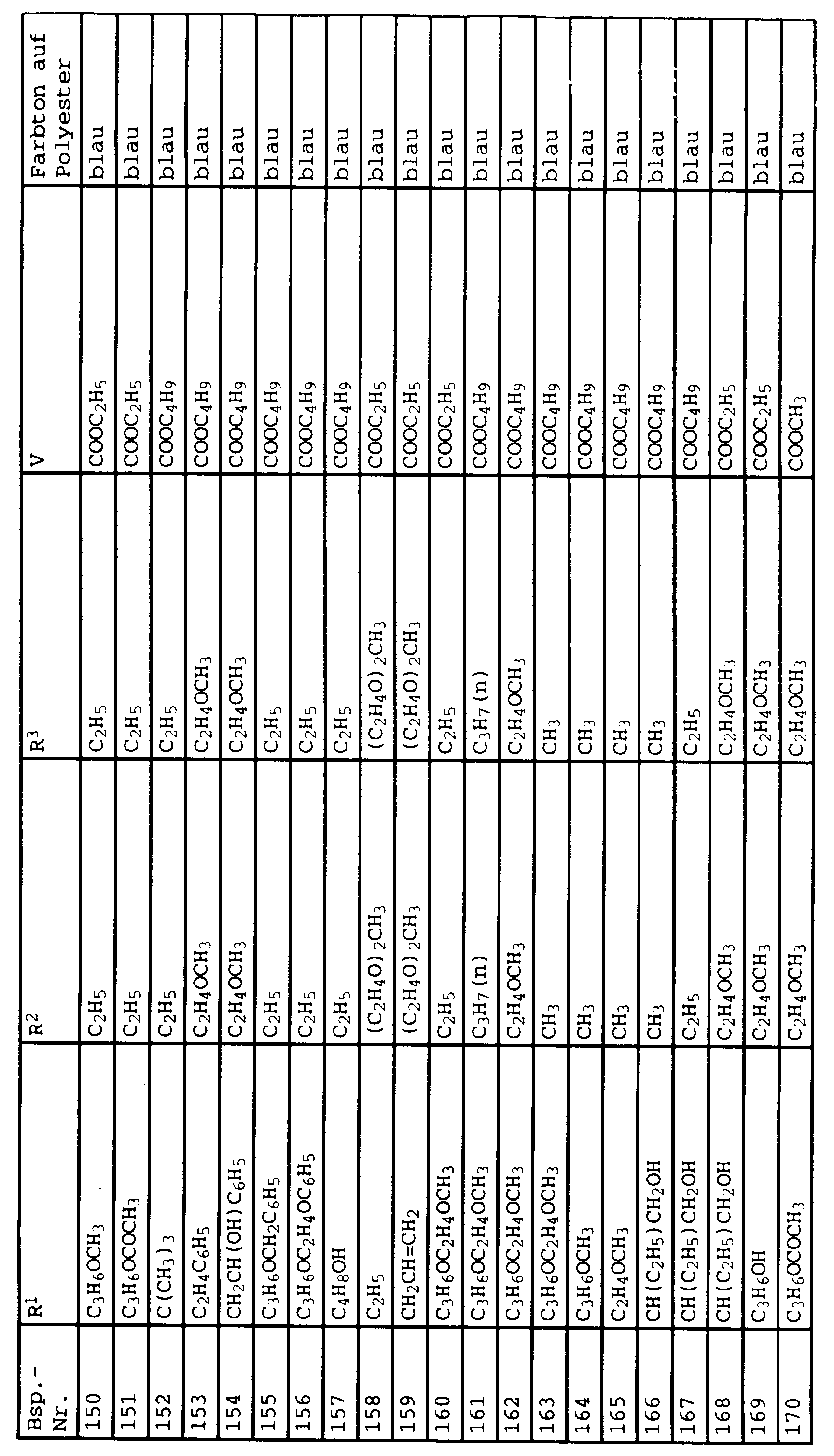

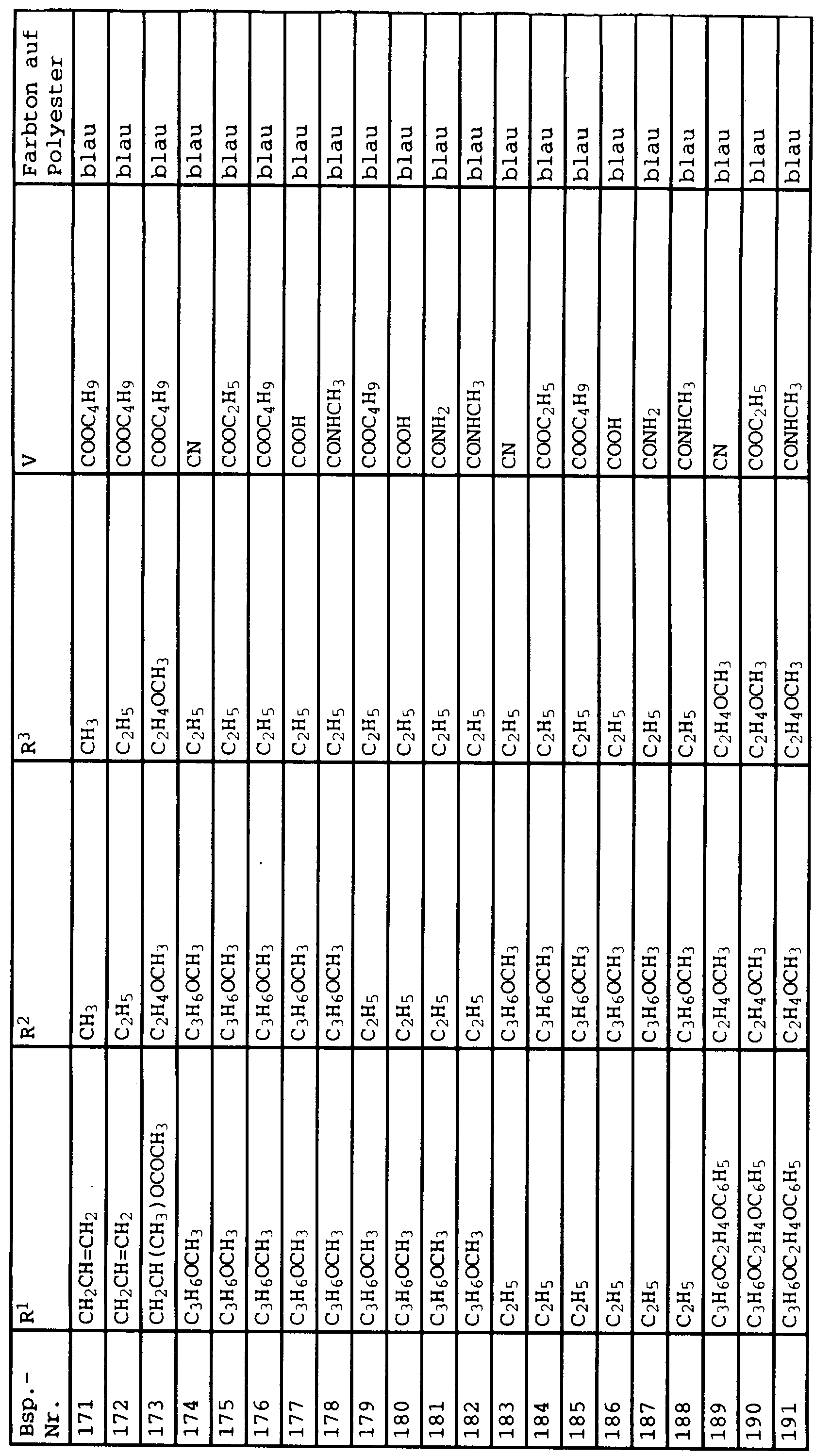

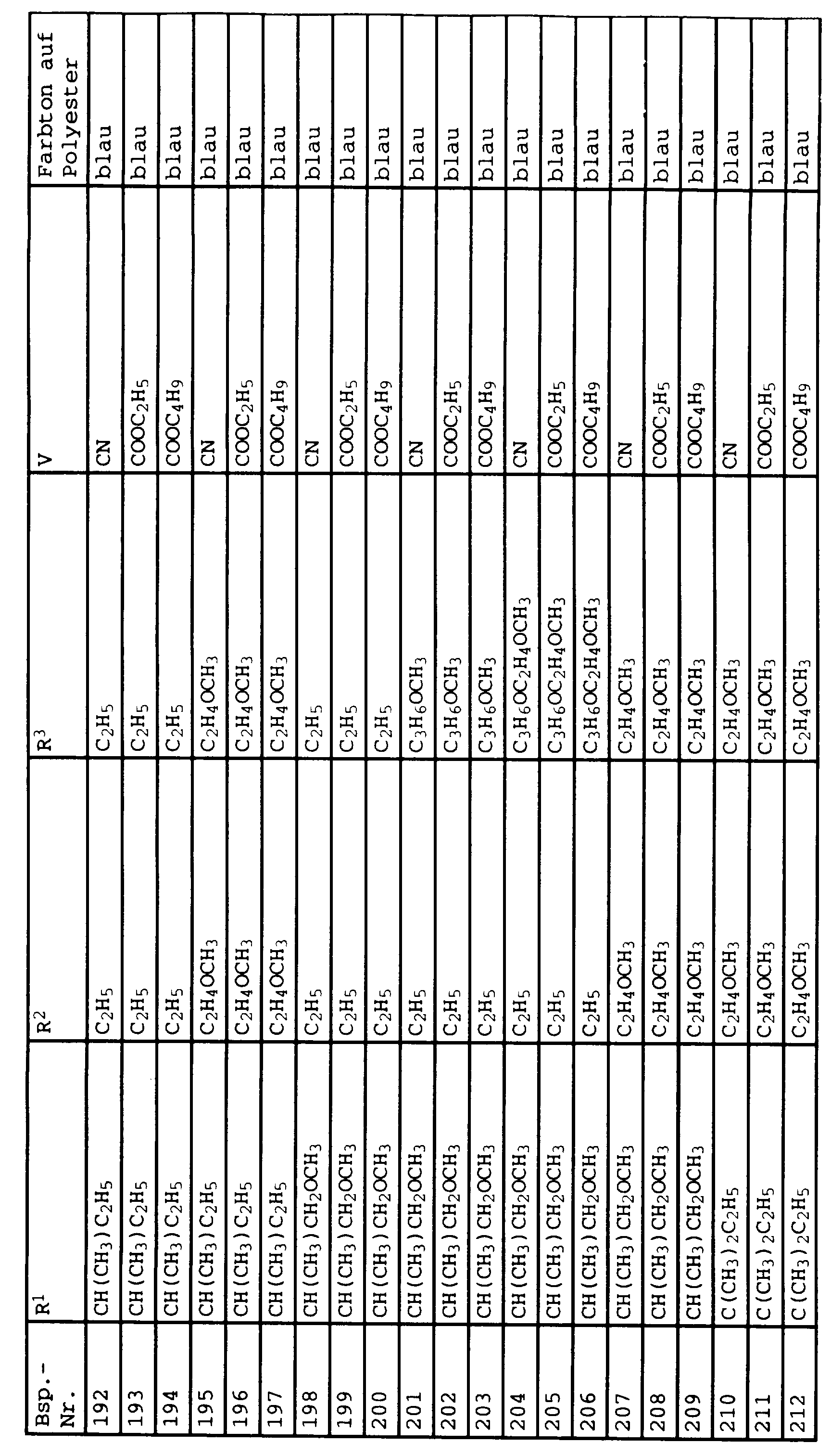

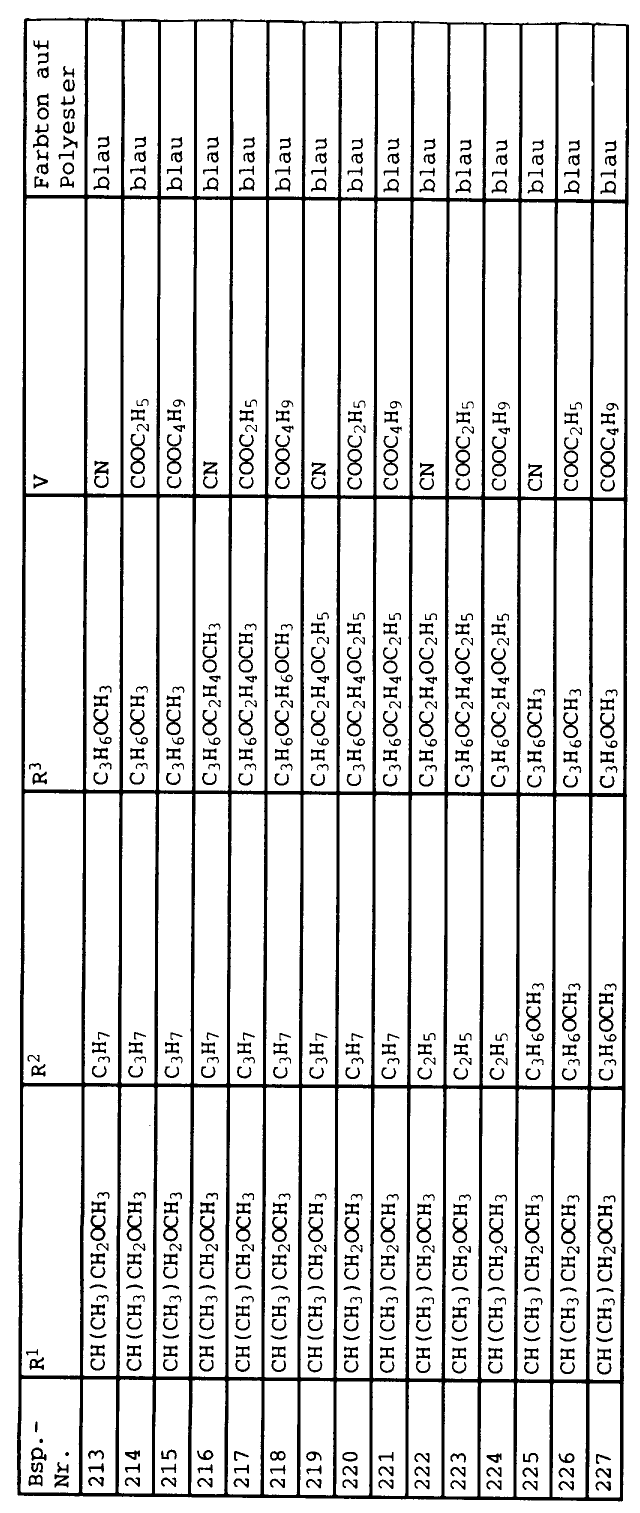

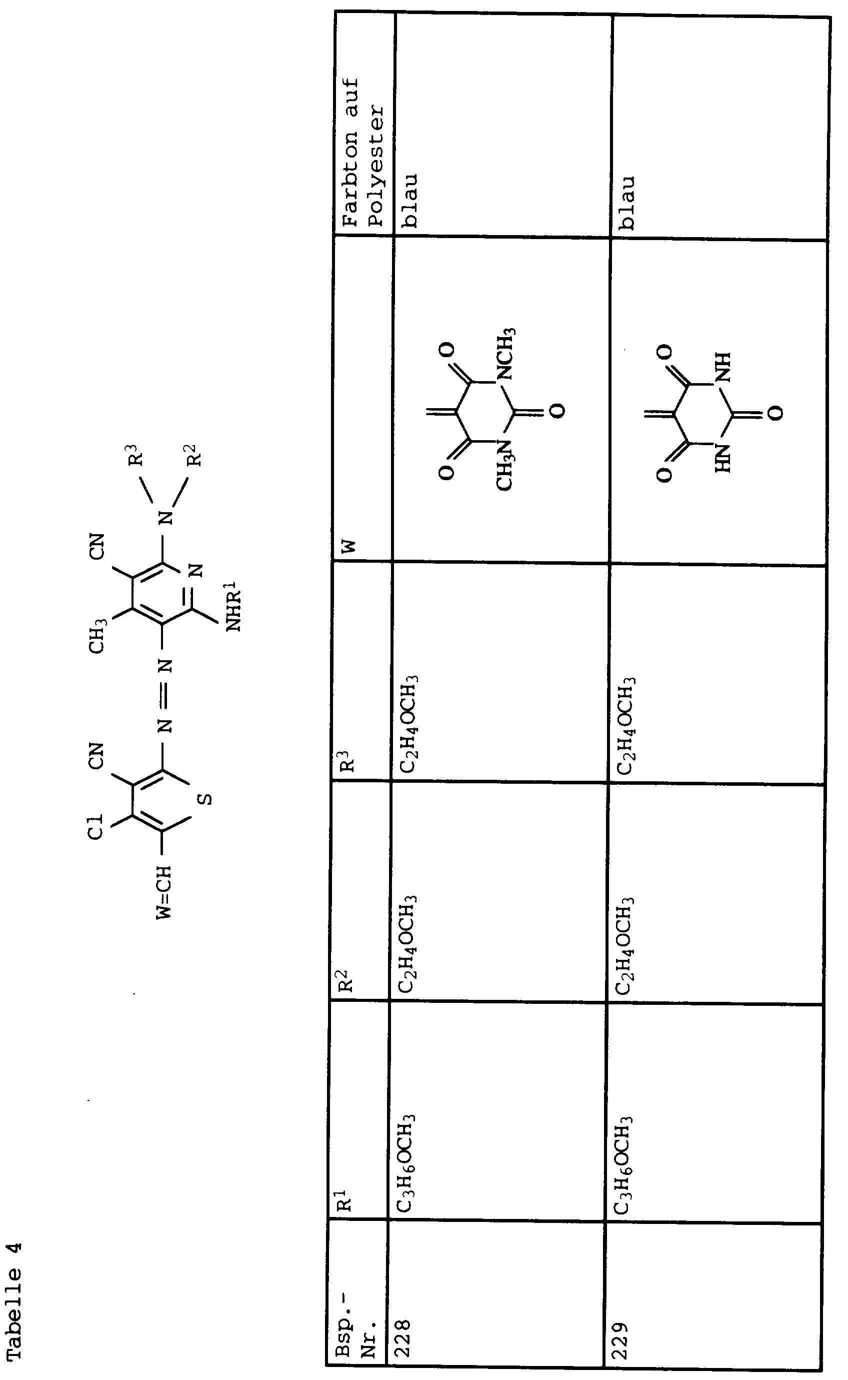

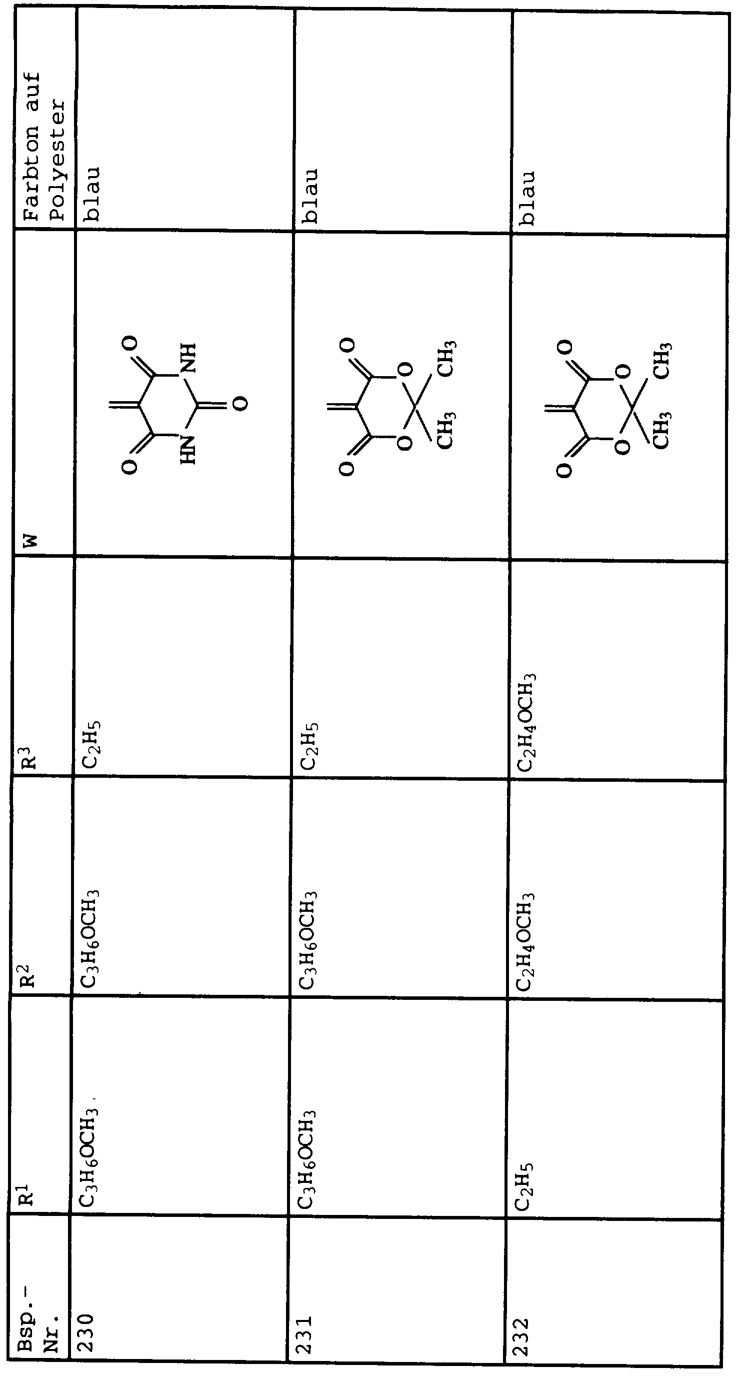

## Patentansprüche

1. Verfahren zum Färben und Bedrucken von textilen Materialien mittels Azofarbstoffen, dadurch gekennzeichnet, daß man Azofarbstoffe der Formel I 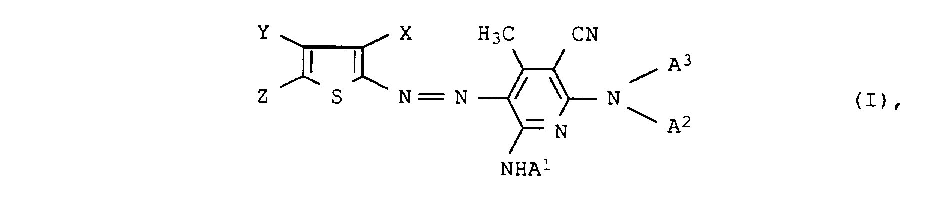 verwendet, in der
X Cyano oder einen Rest der Formel COOQ¹ oder CONQ¹Q, wobei Q¹ und Q gleich oder verschieden sind und unabhängig voneinander jeweils für gegebenenfalls substituiertes C₁-C₁₂-Alkyl, das durch 1 bis 3 Sauerstoffatome in Etherfunktion unterbrochen sein kann, C₅-C₇-Cycloalkyl, C₃-C₄-Alkenyl, gegebenenfalls substituiertes Phenyl oder Q¹ und Q zusammen mit dem sie verbindenden Stickstoffatom für einen 5- oder 6-gliedrigen gesättigten heterocyclischen Rest der gegebenenfalls weitere Heteroatome enthält, oder Q zusätzlich auch für Wasserstoff stehen,
Y C₁-C₆-Alkoxy, C₁-C₆-Alkylthio, C₁-C₆-Alkylsulfonyl, Halogen, gegebenenfalls substituiertes Phenoxy, gegebenenfalls substituiertes Phenylthio oder gegebenenfalls substituiertes Phenylsulfonyl,
Z Cyano, Nitro, gegebenenfalls substituiertes Phenylsulfonyl, C₁-C₆-Alkylsulfonyl, Formyl oder einen Rest der Formel -CH=T, worin T für den Rest einer CH-aciden Verbindung steht, und
A¹, A und A³ gleich oder verschieden sind und unabhängig voneinander jeweils gegebenenfalls substituiertes C₁-C₁₂-Alkyl, das durch 1 bis 3 Sauerstoffatome in Etherfunktion unterbrochen sein kann,
C₅-C₇-Cycloalkyl, gegebenenfalls substituiertes Phenyl, C₃-C₆-Alkenyl, gegebenenfalls substituiertes Benzoyl, C₁-C₈-Alkanoyl, C₁-C₆-Alkylsulfonyl oder gegebenenfalls substituiertes Phenylsulfonyl oder A und A³ zusammen mit dem sie verbindenden Stickstoffatom einen 5- oder 6-gliedrigen gesättigten heterocyclischen Rest, der gegebenenfalls weitere Heteroatome enthält, bedeuten.

2. Verfahren nach Anspruch 1, dadurch gekennzeichnet, daß
X Cyano oder den Rest der Formel COOQ¹, worin Q¹ für C1-C4-Alkyl steht,
Y C₁-C₄-Alkoxy, C₁-C₄-Alkylthio, C₁-C₄-Alkylsulfonyl, Chlor, Brom, Phenoxy, Phenylthio oder Phenylsulfonyl,
Z Cyano, Formyl oder einen Rest der Formel -CH=T, worin T die in Anspruch 1 genannte Bedeutung besitzt, und
A¹, A und A³ unabhängig voneinander jeweils C₁-C₈-Alkyl, das gegebenenfalls substituiert ist und durch 1 oder 2 Sauerstoffatome in Etherfunktion unterbrochen sein kann, C₅-C₇-Cycloalkyl oder C₃-C₄-Alkenyl oder A und A³ zusammen mit dem sie verbindenden Stickstoffatom einen 5- oder 6-gliedrigen gesättigten heterocyclischen Rest, der gegebenenfalls weitere Heteroatome enthält, bedeuten.

3. Verfahren nach Anspruch 1, dadurch gekennzeichnet, daß
X Cyano,
Y Ethoxy, C₁-C₄-Alkylthio, Chlor, Brom, Phenoxy oder Phenylthio,
Z Formyl oder einen Rest der Formel 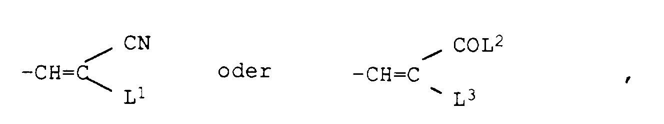 worin L¹ für Cyano, C₁-C₄-Alkanoyl oder C₁-C₄-Alkoxycarbonyl, L für C₁-C₄-Alkyl oder C₁-C₄-Alkoxy und L³ für C₁-C₄-Alkoxycarbonyl stehen, und
A¹, A und A³ unabhängig voneinander jeweils C₁-C₈-Alkyl, das gegebenenfalls substituiert ist und durch 1 oder 2 Sauerstoffatome in Etherfunktion unterbrochen sein kann, oder A und A³ zusammen mit dem sie verbindenden Stickstoffatom Pyrrolidinyl, Piperidinyl, Morpholinyl, Piperazinyl oder N-(C₁-C₄-Alkyl)piperazinyl bedeuten.

4. Verfahren nach Anspruch 1, dadurch gekennzeichnet, daß X Cyano und Y Chlor bedeuten.

## Claims

1. A process for dyeing and printing textile materials with azo dyes, which comprises using azo dyes of the formula I 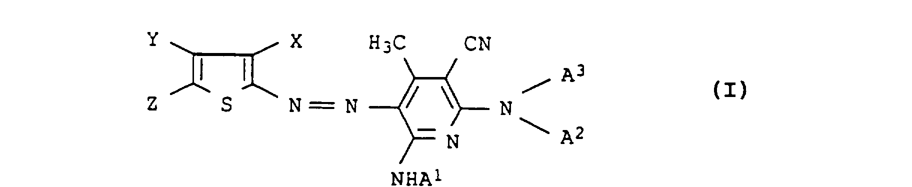 where
X is cyano or a radical of the formula COOQ¹ or CONQ¹Q, wherein Q¹ and Q are identical or different and singly are, independently of the other, substituted or unsubstituted C₁-C₁₂-alkyl with or without interruption by from 1 to 3 oxygen atoms in ether function, C₅-C₇-cycloalkyl, C₃-C₄-alkenyl, or substituted or unsubstituted phenyl or together are, together with the nitrogen atom joining them, a 5- or 6-membered saturated heterocyclic radical with or without further hetero atoms or else Q may additionally be hydrogen,
Y is C₁-C₆-alkoxy, C₁-C₆-alkylthio, C₁-C₆-alkylsulfonyl, halogen, substituted or unsubstituted phenoxy, substituted or unsubstituted phenylthio or substituted or unsubstituted phenylsulfonyl,
Z is cyano, nitro, substituted or unsubstituted phenylsulfonyl, C₁-C₆-alkylsulfonyl, formyl or a radical of the formula -CH=T, wherein T is the radical of an acidic-CH compound, and
A¹, A and A³ are identical or different and singly are, independently of the others, substituted or unsubstituted C₁-C₁₂-alkyl, with or without interruption by from 1 to 3 oxygen atoms in ether function, C₅-C₇-cycloalkyl, substituted or unsubstituted phenyl, C₃-C₆-alkenyl, substituted or unsubstituted benzoyl, C₁-C₈-alkanoyl, C₁-C₆-alkylsulfonyl or substituted or unsubstituted phenylsulfonyl or A and A³ together are, together with the nitrogen atom joining them, a 5- or 6-membered saturated heterocyclic radical with or without further hetero atoms.

2. A process as claimed in claim 1, wherein
X is cyano or a radical of the formula COOQ¹ where Q¹ is C₁-C₄-alkyl,
Y is C₁-C₄-alkoxy, C₁-C₄-alkylthio, C₁-C₄-alkylsulfonyl, chlorine, bromine, phenoxy, phenylthio or phenylsulfonyl,
Z is cyano, formyl or a radical of the formula -CH=T, wherein T is as defined in claim 1, and
A¹, A and A³ singly are, independently of the others, C₁-C₈-alkyl, which may be substituted and may be interrupted by 1 or 2 oxygen atoms in ether function, C₅-C₇-cycloalkyl or C₃-C₄-alkenyl or A and A³ together are, together with the nitrogen atom joining them, a 5- or 6-membered saturated heterocyclic radical with or without further hetero atoms.

3. A process as claimed in claim 1, wherein
X is cyano,
Y is ethoxy, C₁-C₄-alkylthio, chlorine, bromine, phenoxy or phenylthio,
Z is formyl or a radical of formula 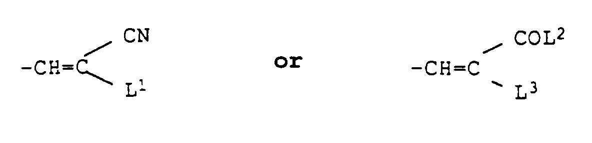 where L¹ is cyano, C₁-C₄-alkanoyl or C₁-C₄-alkoxycarbonyl, L is C₁-C₄-alkyl or C₁-C₄-alkoxy, and L³ is C₁-C₄-alkoxycarbonyl, and
A¹, A and A³ singly are, independently of the others, C₁-C₈-alkyl, which may be substituted and may be interrupted by 1 or 2 oxygen atoms in ether function, or A and A³ together are, together with the nitrogen atom joining them, pyrrolidinyl, piperidinyl, morpholinyl, piperazinyl or N- (C₁-C₄-alkyl)piperazinyl.

4. A process as claimed in claim 1, wherein X is cyano and Y is chlorine.

## Revendications

1. Procédé de teinture et d'impression de matières textiles au moyen de colorants azoïques, caractérisé en ce que l'on utilise des colorants azoïques de formule I 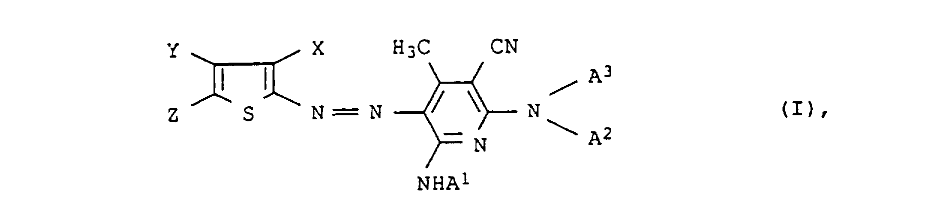 dans laquelle
X représente un groupement cyano ou un reste de formule COOQ¹ ou CONQ¹Q, Q¹ et Q étant identiques ou différents et étant mis chacun, indépendamment l'un de l'autre, pour un reste alkyle en C₁-C₁₂ éventuellement substitué qui peut être interrompu par 1 à 3 atomes d'oxygène en fonction éther, cycloalkyle en C₅-C₇, alcenyle en C₃-C₄, phényle éventuellement substitué, ou Q¹ et Q étant mis ensemble, avec l'atome d'azote qui les relie, pour un reste hétérocyclique saturé à 5 ou 6 chaînons qui contient éventuellement d'autres hétéroatomes, ou Q étant en plus mis pour un atome d'hydrogène,
Y représente un groupement alcoxy en C₁-C₆, alkylthio en C₁-C₆, alkylsulfonyle en C₁-C₆, un atome d'halogène, un groupement phénoxy éventuellement substitué, phénylthio éventuellement substitué ou phénylsulfonyle éventuellement substitué,
Z représente un groupement cyano, nitro, phénylsulfonyle éventuellement substitué, alkylsulfonyle en C₁-C₆, formyle ou un reste de formule -CH=T, où T est mis pour le reste d'un composé à CH acide,
A¹, A et A³ sont identiques ou différents et représentent chacun, indépendamment les uns des autres, un reste alkyle en C₁-C₁₂ éventuellement substitué qui peut être interrompu par 1 à 3 atomes d'oxygène en fonction éther, cycloalkyle en C₅-C₇, phényle éventuellement substitué, alcényle en C₃-C₆, benzoyle éventuellement substitué, alcanoyle en C₁-C₈, alkylsulfonyle en C₁-C₆ ou phénylsulfonyle éventuellement substitué, ou A et A³ représentent ensemble, avec l'atome d'azote qui les relie, un reste hétérocyclique saturé à 5 ou 6 chaînons qui contient éventuellement d'autres hétéroatomes.

2. Procédé selon la revendication 1, caractérisé en ce que
X représente un groupement cyano ou le reste de formule COOQ¹, dans laquelle Q¹ est mis pour un groupement alkyle en C₁-C₄,
Y représente un groupement alcoxy en C₁-C₄, alkylthio en C₁-C₄, alkylsulfonyle en C₁-C₄, un atome de chlore, de brome, un groupement phénoxy, phénylthio ou phénylsulfonyle,
Z représente un groupement cyano, formyle ou un reste de formule -CH=T, dans laquelle T a la signification donnée dans la revendication 1, et
A¹, A et A³ représentent chacun, indépendamment les uns des autres, un groupement alkyle en C₁-C₈ qui est éventuellement substitué et peut être interrompu par 1 ou 2 atomes d'oxygène en fonction éther, cycloalkyle en C₅-C₇ ou alcényle en C₃-C₄, ou A et A³ représentent ensemble, avec l'atome d'azote qui les relie, un reste hétérocyclique saturé à 5 ou à chaînons qui contient éventuellement d'autres hétéroatomes.

3. Procédé selon la revendication 1, caractérisé en ce que
X représente un groupement cyano,
Y représente un groupement éthoxy, alkylthio en C₁-C₄, un atome de chlore, de brome ou un groupement phénoxy ou phénylthio,
Z représente un groupement formyle ou un reste de formule 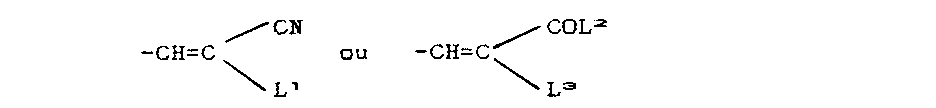 dans laquelle L¹ est mis pour un groupement cyano, alcanoyle en C₁-C₄ ou alcoxycarbonyle en C₁-C₄, L pour un groupement alkyle en C₁-C₄ ou alcoxy en C₁-C₄ et L³ pour un groupement alcoxycarbonyle en C₁-C₄, et
A¹, A et A³ représentent chacun, indépendamment les uns des autres, un groupement alkyle en C₁-C₈ qui est éventuellement substitué et peut être interrompu par 1 ou 2 atomes d'oxygène en fonction éther, ou A et A³ représentent ensemble, avec l'atome d'azote qui les relie, un groupement pyrrolidinyle, pipéridinyle, morpholinyle, pipérazinyle ou N-(alkyl en C₁-C₄)pipérazinyle.

4. Procédé selon la revendication 1, caractérisé en ce que X représente un groupement cyano et Y un atome de chlore.
